# EUROPÄISCHE PATENTSCHRIFT

(11) **EP 1 555 566 B1**
(45) Veröffentlichungstag und Bekanntmachung des Hinweises auf die Patenterteilung: **29.02.2012**
(21) Anmeldenummer: 04018733.8
(22) Anmeldetag: 06.08.2004
(51) Int. Cl.: G02C 5/00, G02C 3/00

(54) **Elastische Brille**
Resilient spectacles
Lunettes élastiques

(30) Priorität: 19.01.2004 DE 102004002700
(43) Veröffentlichungstag der Anmeldung: 20.07.2005
(73) Patentinhaber: Egger, Christoph, 6290 Mayrhofen (AT)
(72) Erfinder: Egger, Christoph, 6290 Mayrhofen (AT)
(74) Vertreter: Tiesmeyer, Johannes

(56) Entgegenhaltungen:
- EP-A- 0 588 216
- WO-A-00/03669
- WO-A-00/75715
- BE-A- 473 300
- FR-A- 2 612 652
- US-A- 3 621 544
- US-A- 5 440 356
- US-A- 5 760 868
- US-A- 5 880 171
- US-B1- 6 170 952

## Beschreibung

Die Erfindung betrifft eine Brille mit Durchsichtbereichen für das linke Auge und für das rechte Auge eines Brillenträgers, mit zwei länglichen Ohrauflagestützen zur Abstützung der Brille an den Ohren des Brillenträgers, ggf. mit die Durchsichtbereiche begrenzenden oder miteinander verbindenden Rahmenelementen, sowie mit Verbindungsbereichen, welche die Ohrauflagestützen mit den Durchsichtbereichen bzw. mit ggf. vorhandenen Rahmenelementen verbinden oder die Durchsichtbereiche miteinander verbinden.

Brillen der vorstehend genannten Art sind in vielfältigen Formen bekannt. Die Durchsichtbereiche werden allgemein auch als Gläser bezeichnet, ungeachtet dessen, ob ihr Material Glas im herkömmlichen Sinne oder Kunststoff ist. Die Gläser können rahmenlos - oder in Rahmenelementen eingefasst sein. Die konventionellen Brillen der hier betrachteten Art haben ferner Ohrauflagestützen (Brillenbügel) aus Metall oder Hartkunststoff, welche im Allgemeinen einen länglichen Ohrauflagestützabschnitt und einen daran anschließenden und normalerweise abgewinkelten Hinterohr-Halteabschnitt aufweisen.

Solche Brillen der konventionellen Bauart für den allgemeinen Gebrauch als Sehhilfen, insbesondere auch als Sonnenbrillen, haben sich bei normaler Handhabung als beschädigungsanfällig und empfindlich erwiesen. So kommt es häufig vor, dass eine Brille auf einen harten Boden herabfällt oder ein vergleichsweise schwerer Gegenstand versehentlich auf die Brille gelegt wird, so dass Brillenbügel dabei stark deformiert oder von der Brille abgerissen werden, Rahmenteile verbogen und/oder Brillengläser zerbrochen werden. Oft kommt es auch dadurch zur Zerstörung einer Brille, dass eine Person versehentlich auf die Brille tritt oder sich auf die Brille setzt.

Es sind auch Taucherbrillen, Arbeitsschutzbrillen usw. bekannt, bei denen die Mittel zur Fixierung der Brille am Kopf des Brillenträgers aus unzerbrechlichen Materialien, wie Gummi oder Textil gebildet sind. Brillen dieser Art haben jedoch keine Brillenbügel aus Ohrauflagestützen und Hinterohr-Halteabschnitten, sondern eine Schlaufe oder ein Band, welches um den Kopf des Brillenträgers herum anzuordnen ist, also auch am Hinterkopf des Brillenträgers umläuft. Solche Brillen sind weniger beschädigungsanfällig als die oben genannten herkömmlichen Brillen für den täglichen Gebrauch. Aufgrund der wohl als nicht besonders ansehnlich empfundenen Kopfschlaufenbefestigung haben diese Brillen jedoch nur in spezifischen Anwendungsbereichen als Arbeitsschutzbrillen und Sportbrillen, etwa Taucherbrillen, Verwendung gefunden.

Die US-A-5,760,868 offenbart eine Brille mit den Merkmalen des Oberbegriffs des Anspruchs 1, in welcher Ohrauflagestützen einstückig mit dem die Durchsichtbereiche tragenden Rahmen verbunden sind, wobei die Ohrauflagestützen aus einem entspannten Zustand der Brille heraus unter quasi-elastischer Deformation der Ohrauflagestützen und eines Verbindungsbereichs der Ohrauflagestützen mit dem Rahmen voneinander abspreizbar sind, um sie in eine normale Gebrauchsposition am Kopf des Brillenträgers zu bringen. In der entspannten Stellung weisen die distalen Enden der Ohrauflagestützen voneinander einen solchen Abstand auf, dass die Brille während des Nichtgebrauchs um den Hals gehängt werden kann. Die Durchsichtbereiche der bekannten Brille sind beispielsweise aus Polycarbonat hergestellt.

Zur weiteren Illustration des Stands der Technik kann ferner auf die WO-0075715 A1 verwiesen werden, welche ebenfalls eine Sportbrille mit materialeinheitlich am Rahmen angeformten Ohrauflagestützen offenbart, wobei die Verbindungsbereiche zwischen Ohrauflagestützen und Rahmen eine Materialverjüngung aufweisen, um an dieser Stelle ein Scharnier zu bilden. US 6,170,952 offenbart Brillengläser mit Linsen aus elastomeren aufklebbaren Polymermaterialien, wie z. B. aliphatischen Polyurethanen.

Der vorliegenden Erfindung liegt die Aufgabe zugrunde, eine Brille, insbesondere eine Sonnenbrille für den Alltagsgebrauch bereitzustellen, welche selbst bei robuster Handhabung nicht beschädigungsanfällig ist und dennoch eine dezente Gestalt haben kann.

Zur Lösung dieser Aufgabe wird erfindungsgemäß eine Brille mit den Merkmalen des Anspruchs 1 vorgeschlagen. In einer solchen Brille sind die Durchsichtbereiche, die Ohrauflagestützen und die ggf. vorhandenen Rahmenelemente sowie die Verbindungsbereiche flexibel biegsam und die Ohrauflagestützen sind aus einem entspannten Zustand der Brille heraus unter quasi-elastischer Deformation wenigstens eines der Verbindungsbereiche voneinander abspreizbar, um sie in eine normale Gebrauchsposition am Kopf des Brillenträgers zu bringen. Zumindest die Durchsichtsbereiche sind aus einem elastomeren optischen Polyurethankunststoff hergestellt.

Bei der Brille nach der Erfindung sind also nicht nur die "Gläser" flexibel dehnbar, sondern auch die "Bügel" bzw. "Fassungsteile". Eine solche Brille erleidet keine Beschädigung, wenn sie versehentlich auf einen harten Boden fällt oder wenn sich eine Person versehentlich darauf setzt. Es ist auch nicht erforderlich, sie beim alltäglichen Transport in einem aufwendigen Maße pfleglich zu behandeln. Durch geeignete Wahl des Brillenmaterials können die optischen und mechanischen Eigenschaften der Durchsichtbereiche und der Ohrauflagestützen so eingestellt bzw. aufeinander abgestimmt werden, dass die bestimmungsgemäße Nutzung der Brille als Augenschutz oder Sehhilfe am Kopf des Brillenträgers durch die grundsätzliche Flexibilität bzw. Gummielastizität nicht beeinträchtigt wird. Die Brille kommt insbesondere ohne mehrteilige mechanische Gelenkanordnungen in den Verbindungsbereichen aus.

Dadurch, dass die Ohrauflagestützen in der oben beschriebenen Weise voneinander abspreizbar sind, um die Brille in eine normale Gebrauchsposition am Kopf des Brillenträgers zu bringen, kann ferner ein sicherer Halt der Brille am Kopf des Brillenträgers gewährleistet werden. In einem entspannten Zustand der Brille weisen also die Ohrauflagestützen mit ihren freien Enden nach innen aufeinander zu oder überkreuzen einander. Beim Abspreizen der Ohrauflagestützen werden sich dann die Verbindungsbereiche, die Ohrauflagestützen, die Durchsichtbereiche sowie ggf. die Rahmenelemente je nach Biegesteifigkeit der einzelnen Teile elastisch verformen, so dass die Ohrauflagestützen nach dem Abspreizen in die Gebrauchsstellung und Aufsetzen der Brille mit leichtem Druck am Kopf des Brillenträgers anliegen. Auf diese Weise ist es außerdem möglich, auf Hinterohr-Halteabschnitte, wie sie bei herkömmlichen Brillen oftmals vorgesehen sind, gänzlich zu verzichten, was einerseits Vorteile für den Tragekomfort und andererseits größere Freiheiten in der Gestaltung des äußeren Erscheinungsbilds der Brille mit sich bringen kann.

Gemäß einem Merkmal der erfindungsgemäßen Brille geschieht das Abspreizen der Ohrauflagestützen unter quasi-elastischer Deformation wenigstens eines der Verbindungsbereiche. Auf diese Weise kann zumindest durch die quasi-elastische Deformation des wenigstens einen Verbindungsbereichs ein Anpressdruck der Ohrauflagestützen am Kopf des Brillenträgers bereitgestellt werden, so dass sogar eine Ausführungsform der Erfindung denkbar ist, in welcher die Deformation der Brille beim Überführen von der entspannten Stellung in die normale Gebrauchsstellung im Wesentlichen auf eine Deformation der Verbindungsbereiche beschränkt ist. In der Praxis wird man die Materialien für die Komponenten der Brille jedoch so wählen, dass beim Abspreizen der Ohrauflagestützen alle flexibel biegsamen Teile der Brille einer Deformation unterzogen werden, wobei das Ausmaß der Deformation dann von der Biegesteifigkeit der jeweiligen Teile abhängt.

Im Folgenden wird vornehmlich auf Brillen Bezug genommen, bei welchen zwei Verbindungsbereiche vorgesehen sind, die jeweils die Ohrauflagestützen mit den Durchsichtbereichen bzw. mit den ggf. vorhandenen Rahmenelementen verbinden. Die Erfindung soll jedoch ebenfalls Brillen betreffen, bei welchen die beiden Durchsichtbereiche oder ggf. den Durchsichtbereichen zugeordnete Abschnitte der Rahmenelemente durch einen Verbindungsbereich miteinander verbunden sind. Bei der Abspreizung der Ohrauflagestützen werden dann je nach Biegesteifigkeit der Brillenteile die Durchsichtbereiche ggf. gegeneinander verschwenkt.

Besonders bevorzugt wird eine erste Ausführungsform der vorliegenden Erfindung, in welcher der wenigstens eine Verbindungsbereich der Brille eine geringere Biegesteifigkeit aufweist als die Ohrauflagestützen und die Durchsichtbereiche bzw. die ggf. vorhandenen Rahmenelemente.

Die Definition des Begriffs Biegesteifigkeit im Rahmen dieser Erfindung orientiert sich am allgemein technischen Verständnis dieses Begriffs und versteht die Biegesteifigkeit als die Fähigkeit eines auf Biegung beanspruchten Bauteils, der Verbiegung Widerstand entgegenzusetzen und nach Aufhören der Beanspruchung elastisch oder quasi-elastisch in den Ausgangszustand zurückzukehren. Bei einer Brille gemäß der ersten Ausführungsform der Erfindung, bei welcher der wenigstens eine Verbindungsbereich eine geringere Biegesteifigkeit aufweist als im Wesentlichen alle anderen Komponenten der Brille, werden beim Abspreizen der Ohrauflagestützen zum Überführen der Brille in eine normale Gebrauchsposition am Kopf des Brillenträgers die Ohrauflagestützen und die Durchsichtbereiche bzw. die ggf. vorhandenen Rahmenelemente entsprechend weniger deformiert werden als der wenigstens eine Verbindungsbereich, so dass die Ohrauflagestützen ohne größere Veränderung ihrer Form voneinander abspreizbar sind. Auf diese Weise wirkt der mindestens eine Verbindungsbereich in der Art eines Schwenkpunkts oder eines Scharniers, um welchen angrenzende Brillenteile verschwenkbar sind.

Gegebenenfalls wird es zweckmäßig sein, auch die von den Verbindungsbereichen verschiedenen Brillenteile, insbesondere die Ohrauflagestützen und die Durchsichtbereiche mit ihren ggf. vorhandenen Rahmenelementen jeweils mit einer unterschiedlichen Biegesteifigkeit auszubilden. Insgesamt können die Biegesteifigkeiten und Formen der einzelnen Brillenteile ganz unterschiedlich gewählt werden, solange sichergestellt ist, dass die Brille in der normalen Gebrauchsposition am Kopf des Brillenträgers eine gewünschte Sollform erreicht. Von dieser Sollform kann die Form der Brille im entspannten Zustand ggf. stark abweichen, um einerseits durch die elastischen Rückstellkräfte einen sicheren Halt der Brille am Kopf des Brillenträgers bereitzustellen und andererseits die Brille im entspannten Zustand in eine weniger sperrige, zusammengerollte oder zusammengeklappte Form zu überführen.

Um einen Verbindungsbereich der oben genannten Art, insbesondere einen Verbindungsbereich mit geringerer Biegesteifigkeit bereitzustellen, kann dieser einen Materialschwächungsabschnitt, insbesondere eine Nut oder eine Ausnehmung aufweisen. Durch die Materialschwächung bzw. die Nut oder die Ausnehmung weist der Verbindungsbereich eine geringere Biegesteifigkeit auf als die Ohrauflagestützen und die Durchsichtbereiche bzw. die ggf. vorhandenen Rahmenelemente. Der Vorteil derart gestalteter Verbindungsbereiche liegt darin, dass sie materialeinheitlich mit benachbarten Elementen ausgebildet werden können und insbesondere auch die gesamte Brille aus demselben Material hergestellt werden kann.

Der wenigstens eine Verbindungsbereich kann jedoch auch aus einem anderen Material gebildet sein als die Ohrauflagestützen und die Durchsichtbereiche bzw. die ggf. vorhandenen Rahmenelemente. Durch geeignete Wahl des Materials für den Verbindungsbereich kann vor allem eine gewünschte elastische Vorspannung der Ohrauflagestützen gewählt werden, so dass die Brille bequem, jedoch sicher am Kopf des Brillenträgers sitzt. Durch verschiedene Materialien können jedoch auch bestimmte ästhetische Effekte erzielt werden.

Insbesondere wird an die Verwendung eines gummielastischen Materials, insbesondere Gummi, für den wenigstens einen Verbindungsbereich gedacht, während die Ohrauflagestützen und die Durchsichtbereiche bzw. die ggf. vorhandenen Rahmenelemente aus einem thermoplastischen Elastomer gebildet sein können.

Die genannten Materialien oder andere Materialien können so gewählt werden, dass der wenigstens eine Verbindungsbereich eine Shore-A-Härte von ca. 75 bis ca. 85, vorzugsweise von ca. 80 aufweist und die Ohrauflagestützen und die Durchsichtbereiche bzw. die ggf. vorhandenen Rahmenelemente eine Shore-D-Härte von ca. 50 bis ca. 60, vorzugsweise von ca. 55 aufweisen. Eine Brille mit derart ausgewählten Materialien weist in ihren Verbindungsbereichen einerseits eine ausreichende Flexibilität auf, um die Ohrauflagestützen wie oben beschrieben abspreizen zu können, und stellt andererseits bei entsprechender Formgebung eine ausreichend große elastische Vorspannung bereit, um die Ohrauflagestützen im Gebrauchszustand der Brille am Kopf des Brillenträgers ausreichend sicher gegen den Kopf anzudrücken. Außerdem weisen die Ohrauflagestützen und die Durchsichtbereiche bzw. die ggf. vorhandenen Rahmenelemente bei der Verwendung von Materialien im oben angegebenen Härtebereich einerseits eine ausreichende Flexibilität und Elastizität auf, um die oben beschriebene elastische Rückstellkraft zum Halten der Brille am Kopf bereitzustellen sowie um sich bei einer größeren Beanspruchung, beispielsweise durch Einklemmen, Herunterfallenlassen, Überdehnung oder sonstige äußere Beanspruchung der Brille, elastisch zu verformen und so ein Zerbrechen der Brille zu verhindern, andererseits ist der gesamte Brillenkörper jedoch noch immer steif genug, um im normalen Gebrauchszustand am Kopf des Brillenträgers bei normaler Beanspruchung eine Sollform beizubehalten und sicher am Kopf des Brillenträgers zu sitzen.

Um Freiheiten für die Wahl des äußeren Erscheinungsbilds der Brille zu belassen, können die Durchsichtbereiche für das linke Auge und für das rechte Auge wahlweise Teil eines einstückigen Sichtfensters sein oder jeweils durch separate Sichtfenster bereitgestellt sein.

In einer bevorzugten Ausgestaltung ist vorgesehen, dass im normalen Gebrauchszustand der Brille zueinander weisende innere Längsseiten der Ohrauflagestützen eine konkave Querschnittsform aufweisen. Eine solche konkave Querschnittsform der inneren Längsseiten der Ohrauflagestützen ermöglicht es, die Ohrauflagestützen aus einem solchen Material und mit einer solchen Dicke herzustellen, dass sie sich im entspannten Zustand der Brille elastisch nach innen biegen oder durch äußere Beanspruchung, etwa beim Verstauen der Brille, einfach nach innen eingedrückt werden können, jedoch andererseits im normalen Gebrauchszustand der Brille, in welchem die Ohrauflagestützen voneinander abgespreizt sind und am Kopf des Brillenträgers anliegen, einer weiteren Spreizung einen relativ großen Widerstand entgegensetzen und somit die Brille sicher am Kopf des Brillenträgers halten. Die konkave Querschnittsform ermöglicht also, dass die Ohrauflagestützen sich nach innen (aufeinander zu) leichter verbiegen lassen als nach außen (voneinander weg). Grenzen an die Ohrauflagestützen Verbindungsbereiche an, so können diese in normalem Gebrauchszustand der Brille an ihrer zueinander weisenden inneren Seite ebenfalls eine konkave Querschnittsform aufweisen, um auch im Bereich der Verbindungsbereiche den oben genannten Effekt zu erzielen. Wahlweise kann also eine solche konkave Innenkontur an den Ohrauflagestützen oder/und an den Verbindungsbereichen vorgesehen sein.

Unter Design-Gesichtspunkten kann es von Vorteil sein, dass die Außenkonturen der Ohrauflagestützen, der Durchsichtbereiche, der Verbindungsbereiche und der ggf. vorhandenen Rahmenelemente im Wesentlichen stetig ineinander übergehen, d. h. an ihren Übergängen keine Kanten oder Stufen auftreten. Ebenfalls aus ästhetischen Gründen kann die erfindungsgemäße Brille so konstruiert sein, dass sie im normalen Gebrauchszustand am Kopf des Brillenträgers im Wesentlichen die Gesamtform eines Dreiviertelkreisrings aufweist und/oder die Durchsichtbereiche bzw. die ggf. vorhandenen Rahmenelemente von einer Ohrauflagestütze zur anderen Ohrauflagestütze entlang eines Bogens verlaufen.

Als besonders robust, einfach herstellbar und ggf. auch recht ästhetisch wird eine Ausgestaltung der erfindungsgemäßen Brille angesehen, bei welcher die Durchsichtbereiche, etwaige die Durchsichtbereiche begrenzende oder miteinander verbindende Rahmenelemente, die Ohrauflagestützen und die Verbindungsbereiche einstückig - also ohne zusätzliche Halterungs- oder Verbindungselemente oder Scharnierteile - zusammenhängen, so dass sie einen in sich biegsamen, unzerbrechlichen Brillenkörper bilden.

Als Brillenmaterial kommt ein Polymer-Werkstoff, insbesondere ElastomerWerkstoff mit entsprechenden optischen Eigenschaften in Frage. Bevorzugt wird ein thermoplastisches Polyurethan (TPU) als Material für die Ohrauflagestützen und für die ggf. vorhandenen Rahmenelemente, wobei speziell für die Durchsichtbereiche an die Verwendung eines aliphatischen TPUs gedacht wird. Als Material für den Brillenkörper einschließlich den Durchsichtbereichen kommt auch Silikonkautschuk in Frage. Es sollten elektrisch antistatische Materialien verwendet werden. Aus Gründen der vereinfachten Herstellung wird vorgeschlagen, dass die Brille nach der Erfindung in einem Zwei- oder Mehrkomponenten-Spritzgussverfahren hergestellt wird.

Vornehmlich wird auch daran gedacht, dass die Brille nach der Erfindung als Sonnenbrille ausgebildet ist. Bei der Materialauswahl sollte dann darauf geachtet werden, dass insbesondere die Durchsichtbereiche der Brille für ultraviolette Strahlung im UVA- und UVB-Bereich im Wesentlichen undurchlässig sind. Dies kann ggf. auch durch eine Beschichtung mit einem geeigneten Material, etwa einem UV-Schutzlack sichergestellt werden.

Gemäß einer zweiten Ausführungsform der Erfindung umfassen die Ohrlauflagestützen Hinterohr-Halteabschnitte, welche zum Zwecke der Justierung des Passsitzes der Brille am Kopf des jeweiligen Brillenträgers verstellbar sind. Dieses Merkmal ist wichtig, falls die länglichen Ohrauflagestützen relativ weich und für den Transport relativ leicht zusammenfaltbar bzw. zusammendrückbar sein sollen. Mittels der korrekt eingestellten Hinterohr-Halteabschnitte kann dann die mangelnde Stabilität der länglichen Ohrauflagestützen kompensiert werden, wobei die Ohrauflagestützen dabei üblicherweise ein wenig auf Zug beansprucht werden. Es gibt im Rahmen der Erfindung verschiedene Möglichkeiten der Realisierung der Verstellbarkeit der Hinterohr-Halteabschnitte an den Ohrauflagestützen. So kann es gemäß einer Variante vorgesehen sein, dass die Hinterohr-Halteabschnitte jeweils eine von einer jeweiligen Ohrauflagestütze durchsetzte Öse haben, so dass sie auf den Ohrauflagestützen verschiebbar und durch leichten Klemmsitz arretierbar sind.

Eine andere Variante der zweiten Ausführungsform sieht vor, dass die Hinterrohr-Halteabschnitte teleskopisch einschiebbare und ausziehbare Verlängerungsabschnitte der Ohrauflagestützen sind.

Eine weitere Variante der zweiten Ausführungsform sieht vor, dass die Hinterohr-Halteabschnitte integrale, gummielastisch biegsame Bestandteile der Ohrauflagestützen sind und von wenigstens einem biegsamen Metallstützdraht durchsetzt sind. Im Bereich des Metallstützdrahtes am freien Ende der Ohrauflagestütze kann diese dann zur Formung des Hinterohr-Halteabschnittes gebogen werden, wobei der Biegezustand dann unter den üblichen Belastungen beim Tragen der Brille stabil ist. Eine am Hinterkopf des Brillenträgers umlaufende Kopfschlaufe, wie sie von konventionellen Sportbrillen her bekannt ist, ist somit auch in der zweiten Ausführungsform der erfindungsgemäßen Brille nicht erforderlich und aus gestalterischen Gründen auch nicht vorgesehen.

Illustrationsbeispiele sowie erfindungsgemäße Ausführungsbeispiele der Brille werden nachstehend unter Bezugnahme auf die beigefügten Figuren näher erläutert. Es zeigen:
- Fig. 1 und 2: zwei Beispiele in einer Vorderansicht für den Aufbau von Brillen, wobei diese Beispiele nur der Begriffsbestimmung dienen,
- Fig. 3 und 4: eine Draufsicht bzw. eine Seitenansicht einer Brille gemäß einer ersten Ausführungsform der Erfindung,
- Fig. 5 bis 7: Seitenansichten von drei Ausführungsvarianten einer Brille gemäß einer zweiten Ausführungsform der Erfindung, und
- Fig. 8 und 9: eine Vorderansicht bzw. eine Draufsicht einer Brille gemäß einer dritten Ausführungsform der Erfindung.

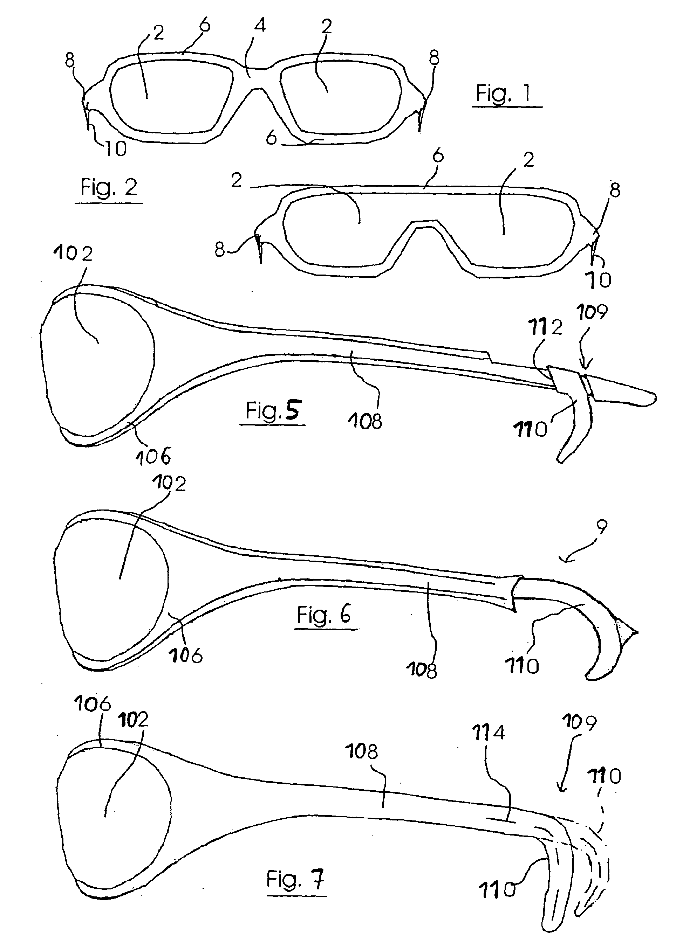

In den Figuren 1 und 2 sind Brillen skizziert, wie sie von ihrem grundsätzlichen Aufbau her auch einer Brille nach der Erfindung entsprechen könnten. Die Durchsichtbereiche der Brille nach den Figuren 1 - 7 sind mit dem Bezugszeichen 2 bezeichnet. Bei dem Beispiel gemäß Fig. 1 sind die Durchsichtbereiche 2 durch einen Nasenbügel 4 voneinander separiert. In dem Beispiel gemäß Fig. 2 gehen die Durchsichtbereiche 2 ineinander über (ein durchgehendes "Sichtglas").

Mit 6 sind in den Figuren je nach Ausführungsform ggf. vorhandene Fassungen bzw. Rahmenteile der Brille bezeichnet. Es sollen rahmenlose Brillen ebenso wie Brillen mit Rahmen von der Erfindung umfasst sein.

Mit 8 bzw. 108 sind in den Figuren Ohrauflagestützen dargestellt, welche an ihren freien Enden 9 je nach Ausführungsform ggf. Hinterohr-Halteabschnitte 10 aufweisen, welche zur Stabilisierung der jeweiligen Brille am Kopf des Brillenträgers dessen Ohren hintergreifen.

Die dargestellten Brillen sind sämtlich aus Polymer-Kunststoffmaterial gebildet. Zumindest für die Durchsichtbereiche 2 bzw. 102 wird ein optischer Polyurethan-Kunststoff, insbesondere ein aliphatisches TPU, verwendet.

Alternativ kann z.B. auch ein Silikonkautschuk, etwa ein Zweikomponenten-Silikonkautschuk, wie er unter der Bezeichnung Silopren von dem deutschen Unternehmen Bayer AG vertrieben wird, in Frage kommen.

Die in den Figuren gezeigten Brillen sind insgesamt gummielastisch ausgebildet, so dass man sie prinzipiell zu einem groben Knäuel zusammendrücken könnte, ohne sie nachhaltig zu beschädigen. Sie können danach wieder in die gezeigte Gebrauchsform zurückversetzt werden, ohne dass es hierfür besonderer Fertigkeiten oder Hilfsmittel bedürfte. Bei der Lagerung oder beim Transport der Brille ist somit keine außergewöhnliche Handhabungs-Sorgfalt erforderlich.

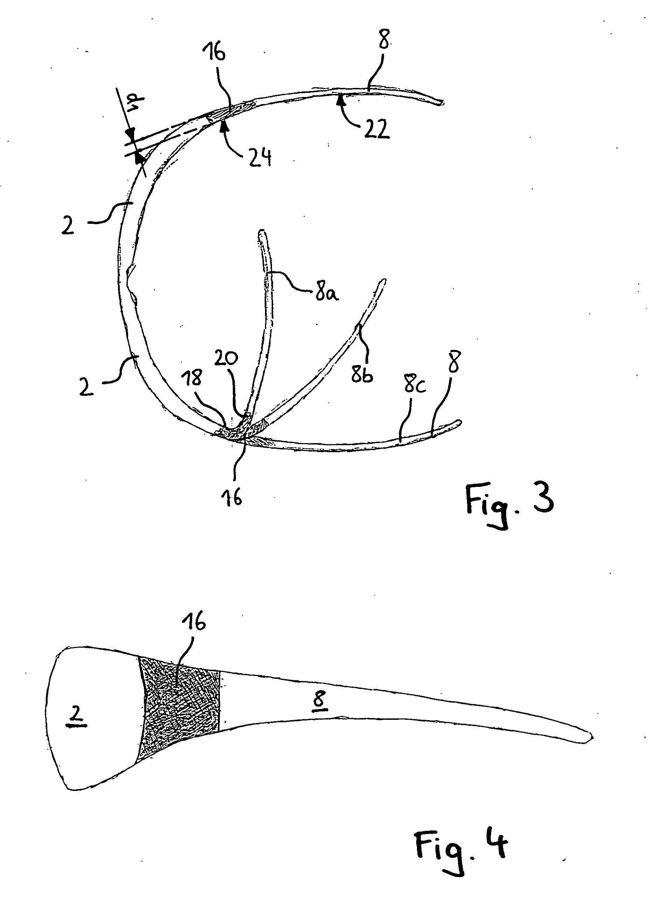

In den Figuren 3 und 4 ist eine erste Ausführungsform der erfindungsgemäßen Brille in einer Draufsicht bzw. einer Seitenansicht gezeigt. Sie besteht im Wesentlichen aus zwei Durchsichtbereichen 2, 2 für das rechte bzw. für das linke Auge, zwei Ohrauflagestützen 8; 8 sowie zwei Verbindungselemente 16, 16, welche die Ohrauflagestützen 8, 8 jeweils mit den Durchsichtbereichen 2, 2 verbinden. In der in den Figuren 3 und 4 gezeigten Ausführungsform wurde als Material für die Verbindungselemente 16, 16 ein Gummi mit einer Shore-A-Härte von ungefähr 80 verwendet, während die Ohrauflagestützen 8, 8 und die Durchsichtbereiche 2, 2 aus einem Polymer-Kunststoffmaterial mit einer Shore-D-Härte von etwa 55 aufgebaut sind. Die Verbindungselemente 16, 16 weisen somit eine deutlich geringere Härte auf als die übrigen Komponenten der Brille. Ferner ist aus den Figuren 3 und 4 ersichtlich, dass die Verbindungselemente 16, 16 wie auch die Ohrauflage 8, 8 und die Durchsichtbereiche 2, 2 im Wesentlichen eine - wenn auch bereichsweise gekrümmte - Plattenform aufweisen und dass die Plattendicke d1 der Verbindungselemente 16, 16 sich nicht wesentlich von der Dicke der Ohrauflagestützen 8, 8 sowie der Durchsichtbereiche 2, 2 unterscheidet. Zwischen den Verbindungselementen 16, 16 und den übrigen Komponenten der Brille besteht also bei etwa vergleichbarer Plattendicke ein signifikanter Unterschied in der Härte.

Aufgrund dieser Konstellation ist die Biegesteifigkeit der Verbindungselemente 16, 16 geringer als die der Ohrauflagestützen 8, 8 und der Durchsichtbereiche 2, 2, so dass beim Abspreizen und Einklappen der Ohrauflagestützen 8, 8 die Verbindungselemente 16, 16 wesentlich stärker deformiert werden als die Ohrauflagestützen 8, 8 oder die Durchsichtbereiche 2, 2. Die Verbindungselemente 16, 16 wirken also in der Art eines Gelenks, um welches die Ohrauflagestützen 8, 8 bezüglich der Durchsichtbereiche 2, 2 verschwenkbar sind.

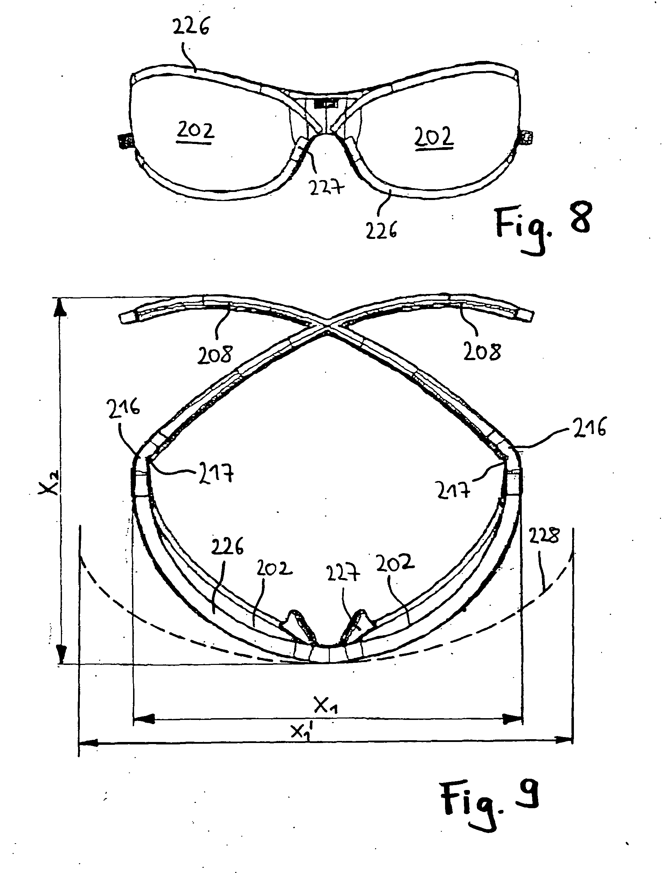

Zur Illustration dieser Schwenkbewegung sind in Fig. 3 drei verschiedene Zustände 8a, 8b, 8c einer Ohrauflagestütze 8 gezeigt. Um die Darstellung der Schwenkbewegung in den Verbindungselementen 16, 16 zu erleichtern, wurden die Durchsichtbereiche 2, 2 sowie die Ohrauflagestützen 8, 8 in den verschiedenen Schwenkpositionen jeweils formstabil gezeichnet, das heißt in Fig. 3 ist die Deformation der Durchsichtbereiche 2, 2 sowie der Ohrauflagestützen 8, 8 nicht dargestellt. Da diese Komponenten der Brille jedoch ebenfalls aus einem elastischen Material aufgebaut sind, werden diese im gewissen Maße beim Aufspreizen der Ohrauflagestützen 8, 8 ebenfalls deformiert werden, wie später in Bezug auf Fig. 9 noch detaillierter erklärt werden wird.

In Fig. 3 soll die mit 8a bezeichnete Ohrauflagestütze einen entspannten Zustand des Verbindungselements 16 illustrieren. Das Verbindungselement 16 ist also in seinem entspannten Zustand winklig ausgebildet, mit einem mit dem angrenzenden Durchsichtbereich 2 verbundenen ersten Schenkel 18 und einem senkrecht zu dem ersten Schenkel 18 verlaufenden und mit der Ohrauflagestütze 8 verbundenen zweiten Schenkel 20. Im entspannten Zustand der Verbindungselemente 16, 16 wird die Brille also in einen Zustand gedrängt, in welchem ihre Ohrauflagestützen 8, 8 nach innen eingeklappt sind, was den zusätzlichen Vorteil bietet, dass die Brille nach dem Absetzen vom Kopf des Brillenträgers selbständig in einen weniger sperrigen Zustand zurückkehrt.

Um die Brille in die Gebrauchsposition am Kopf des Brillenträgers zu überführen, muss die Ohrauflagestütze 8 gegen die elastische Federkraft des Verbindungselements 16 nach außen abgespreizt werden. Eine mittlere Stellung dieser Abspreizbewegung ist in Fig. 3 bei 8b illustriert. Am Kopf des Brillenträgers befindet sich jede der Ohrauflagestützen 8, 8 dann schließlich in der normalen Gebrauchsposition, welche in Fig. 3 bei 8c sowie - für die andere Ohrauflagestütze - bei 8 illustriert ist. In dem bei 8 bzw. 8c gezeigten Gebrauchszustand der Brille stehen die Verbindungselemente 16, 16 unter einer gewissen Vorspannung, da sie aus ihrem entspannten Zustand heraus deformiert sind. Genauer schließen in diesem Zustand die Schenkel 18 und 20 der Verbindungselemente 16, 16 einen Winkel von etwa 180° ein. Durch diese elastische Deformation wird ein Anpressdruck erzeugt, mit welchem die Ohrauflagestützen 8, 8 im normalen Gebrauchszustand der Brille leicht gegen den Kopf des Brillenträgers gedrückt werden. Auf diese Weise kann die Brille sicher am Kopf des Brillenträges gehalten werden und insbesondere auf die Verwendung von Hinterohr-Haltebügeln verzichtet werden.

Als weiteres Merkmal der in Fig. 3 und 4 gezeigten ersten Ausführungsform der erfindungsgemäßen Brille weisen Innenseiten 22, 22 der Ohrauflagestützen 8, 8 sowie Innenseiten 24, 24 der Verbindungselemente 16, 16 jeweils eine konkave Profilform auf, welche den Ohrauflagestützen 8, 8 bzw. den Verbindungselementen 16, 16 zusätzliche Stabilität gegen ein Durchbiegen nach außen, insbesondere über den bei 8c bzw. 8 gezeigten normalen Gebrauchszustand hinaus, verleihen. Vorteilhafterweise werden diese konkaven Profilformen sowie auch die anderen Außenkonturen der einzelnen Komponenten 2, 8, 16 der Brille stetig, d.h. ohne größere Sprünge oder Kanten, ineinander übergehen, um ein ästhetisches äußeres Erscheinungsbild bereitzustellen. In Fig. 3 ist auch gut erkennbar, dass die Brille in ihrem normalen Gebrauchszustand im Wesentlichen die Form eines Dreiviertelkreises aufweist.

In den Figuren 5 - 7 sind Brillen gemäß einer zweiten Ausführungsform der Erfindung dargestellt, welche Hinterohr-Halteabschnitte 110 aufweisen, die zum Zwecke der Justierung des Passsitzes der Brille am Kopf des jeweiligen Brillenträgers verstellbar sind. In den Figuren 5 - 7 sind Ohrauflagestützen 108 der Brille so hingelegt dargestellt, dass sie näherungsweise die Grundgestalt konventioneller Brillenbügel aufweisen.

Vorzugsweise sind auch die länglichen Ohrauflagestützen 108 und die Hinterohr-Halteabschnitte 110 aus einem dem Material der Durchsichtbereiche 102 ähnlichen Kunststoff. Vorzugsweise sind die Brillenkörper aus Durchsichtbereichen 102, etwaigen Rahmenelementen 106 und Ohrauflagestützen 108 einstückig in einem Fertigungsgang aus den gleichen oder ggf. unterschiedlichen Kunststoffmaterialien gefertigt worden. Auch die Hinterohrbügel 110 können aus dem entsprechenden Kunststoffmaterial bestehen. Im Falle der Brille nach Fig. 5 haben die Hinterohr-Halteabschnitte 110 eine Öse 112, welche von dem hinteren Endabschnitt 109 der betreffenden Ohrauflagestütze 108 durchsetzt ist. Der Hinterohr-Halteabschnitt 110 kann somit in Längsrichtung der Ohrauflagestütze 108 verschoben werden, um die Brille anzupassen. Damit der Hinterohr-Halteabschnitt 110 seinen jeweiligen Einstellzustand unter normalen Gebrauchsbedingungen beibehält, sollte der Hinterohr-Halteabschnitt 110 leicht klemmend auf der Ohrauflagestütze 108 aufsitzen. Alternativ könnten auch Rastmittel, etwa Kerben und darin einzubringende Rastvorsprünge an Elementen 108, 110 in Fig. 5 vorgesehen sein, um den Hinterohr-Halteabschnitt 110 in einer jeweiligen Einstellung zu fixieren.

Bei dem Ausführungsbeispiel nach Fig. 6 ist der Hinterohr-Halteabschnitt 110 teleskopisch einschiebbar und herausziehbar in einem Hohlraum der Ohrauflagestütze 108 leicht klemmend aufgenommen. Zur Einstellung des Passsitzes kann somit der Hinterohr-Halteabschnitt 110 in Fig. 6 teleskopisch verschoben werden.

In Fig. 7 ist ein Ausführungsbeispiel gezeigt, bei dem die Ohrauflagestützen 108 im Bereich ihrer freien Enden 109 einen biegsamen Metallstützdraht 114 enthalten. Dieser Metallstützdraht 114 ermöglicht es, durch Abbiegen eines hinteren Endabschnitts der betreffenden Ohrauflagestütze einen Hinterohr-Halteabschnitt 110 an einer gewünschten Stelle anzuformen. In Fig. 7 sind diesbezüglich zwei verschiedene Biegeeinstellungen des Hinterohr-Halteabschnitts 110 angedeutet.

In Fig. 8 und 9 ist eine dritte Ausführungsform der vorliegenden Erfindung gezeigt. Die Zeichnungen der erfindungsgemäßen Brille in den Figuren 8 und 9 sind im Wesentlichen maßstabsgetreu, wobei sich der Maßstab für die beiden Zeichnungen in den Figuren 8 bzw. 9 daraus ergibt, dass die in Fig. 9 gezeichnete Strecke X₁ einem realen Wert von 110,26 mm und die gezeichnete Strecke X₂ einer realen Größe von 114,14 mm entsprechen.

Die in den Figuren 8 und 9 gezeigte Brille gemäß der dritten Ausführungsform weist, ähnlich den zuvor beschriebenen Ausführungsformen, zwei Ohrauflagestützen 208, 208, zwei gemeinsam einen Bogen beschreibende Durchsichtbereiche 202, 202 sowie zwei die Ohrauflagestützen 208, 208 jeweils mit einem Durchsichtbereich 202, 202 verbindende Verbindungselemente 216, 216 auf. Wie am besten in Fig. 8 zu erkennen ist, ist ein die Durchsichtbereiche 202, 202 umlaufender Rand 226 in der Art einer umlaufenden Wulst verbreitert, um in der Funktion von Rahmenelementen der Brille und insbesondere den Durchsichtbereichen 202, 202 eine höhere Formstabilität zu verleihen. Dadurch, dass der Rand 226 materialeinheitlich mit den Durchsichtbereichen 202, 202 ausgebildet und somit ebenfalls in gewissem Maße transparent ist, lässt sich diese rahmenartige Stabilisierung relativ unauffällig bereitstellen, um der Brille insgesamt ein ästhetisches Erscheinungsbild zu verleihen.

Ferner ist in den Figuren 8 und 9 auch ein Nasenbügel 227 zu erkennen, welcher die Brille sicher und definiert auf der Nase des Brillenträgers abstützt. Vorzugsweise ist dieser Nasenbügel 227 aus Silikon gebildet und ist im Übergangsbereich zwischen den beiden Durchsichtbereichen 202, 202 aufgesteckt und fest angeklebt.

Ähnlich der zuvor beschriebenen Ausführungsformen weist die in Figuren 8 und 9 dargestellte Brille Verbindungselemente 216, 216 auf, durch welche die Ohrauflagestützen 208, 208 mit den Durchsichtbereichen 202, 202 verbunden sind. Wie auch in zuvor erläuterten Ausführungsformen sind die Ohrauflagestützen 208, 208 aus TPU, die Durchsichtbereiche 202, 202 aus aliphatischem TPU und die Verbindungselemente 216, 216 aus Gummi aufgebaut, wobei für die einzelnen Brillenteile die oben genannten Shore-A- bzw. Shore-D-Härten eingesetzt werden. Im Zusammenspiel mit den geometrischen Abmessungen der einzelnen Brillenteile, welche sich für die in Fig. 9 gezeigte Ausführungsform in etwa aus der maßstabgestreuen Zeichnung ergeben, stellt die Brille insgesamt einen flexiblen Brillenkörper bereit, welcher im entspannten Zustand (durchgezogene Linien in Fig. 9) zusammengerollt bzw. zusammengeknickt ist. In diesem Zustand ist die Brille weniger sperrig und kann, ggf. unter weiterem Druck auf die Ohrauflagestützen 208, 208 in Richtung der Durchsichtbereiche 202, 202, platzsparend verstaut werden.

Um die Brille in die Gebrauchsposition am Kopf des Brillenträgers zu überführen, können die beiden Ohrauflagestützen 208, 208 ergriffen und auseinandergespreizt werden. Bei dieser Aufspreizbewegung werden alle Teile der Brille je nach ihrer Biegesteifigkeit unterschiedlich stark deformiert. Aufgrund der oben angegebenen Shore-Härte-Werte sowie der oben genannten Abmessungen werden daher die Verbindungselemente 216, 216 der größten Deformation unterliegen und in der Art eines Scharniers oder eines Gelenks wirken, um welche die Ohrauflagestützen 208, 208 relativ zu den Durchsichtbereichen 202, 202 verschwenken.

Aber auch die Ohrauflagestützen 208, 208 und die Durchsichtbereiche 202, 202 sind aus einem flexiblen Material hergestellt und die auf die Ohrauflagestützen 208, 208 beim Aufspreizen ausgeübte Kraft wirkt ebenso auf diese selbst und wird auch auf die Durchsichtbereiche 202, 202 übertragen. Dabei werden insbesondere auch die Durchsichtbereiche 202, 202 so deformiert, dass der Radius ihrer Krümmungen zunimmt.

In Fig. 9 ist die Außenkontur der Durchsichtbereiche 202, 202 im vollständig aufgespreizten Zustand der Brille mit einer gestrichelten Linie bei 228 angedeutet. Die Linie 228 dient nur der Illustration und ungefähren Orientierung und ist insbesondere bzgl. ihres genauen Krümmungsverlaufs nicht zwingend maßstabsgerecht. An dieser Linie 228 erkennt man, dass die Gesamtbreite der Brille im vollständig aufgespreizten Zustand, d.h. im normalen Gebrauchszustand der Brille am Kopf des Brillenträgers, deutlich größer ist als im entspannten Zustand der Brille. In Fig. 9 ist die Breite der Brille im normalen Gebrauchszustand mit X₁' bezeichnet, wobei im gezeigten Ausführungsbeispiel X₁' ungefähr 140 mm beträgt.

Um zu gewährleisten, dass die Deformation der Verbindungsbereiche 202, 202 geometrisch im Wesentlichen gleichförmig ist, sind unterschiedliche Abschnitte der Durchsichtbereiche 202, 202 mit unterschiedlichen Materialstärken gearbeitet. So wäre beispielsweise im Übergangsbereich zwischen dem einen Durchsichtbereich 202 und dem anderen Durchsichtbereich 202, also im Bereich des Nasenbügels 227, bei gleicher Materialstärke die Biegesteifigkeit geringer, da, wie in Fig. 8 gezeigt ist, die Höhe der Brille in diesem Bereich eingeschnürt ist. Um dies zu verhindern, ist die Brille in diesem Bereich etwas dicker ausgebildet. Mit ähnlichen Überlegungen sind zur weiteren Optimierung und genaueren Definition des Deformationsverhaltens in dem Durchsichtbereich 202, 202 der dritten Ausführungsform weitere Materialerhebungen oder -vertiefungen vorgesehen, deren genaue Formen teilweise empirisch ermittelt wurden.

Die Brillen sind vorzugsweise Sonnenbrillen ohne optische Sehfehlerkorrekturmerkmale der Durchsichtbereiche. Es soll jedoch nicht ausgeschlossen sein, dass optisch korrigierende Durchsichtbereiche vorgesehen sind.

## Patentansprüche

1. Brille mit Durchsichtbereichen (2; 102; 202) für das linke Auge und für das rechte Auge eines Brillenträgers, mit zwei länglichen Ohrauflagestützen (8; 108; 208) zur Abstützung der Brille an den Ohren des Brillenträgers, ggf. mit die Durchsichtbereiche (2; 102; 202) begrenzenden oder miteinander verbindenden Rahmenelementen (6), sowie mit Verbindungsbereichen (16; 216), welche die Ohrauflagestützen (8; 108; 208) mit den Durchsichtbereichen (2; 102; 202) bzw. mit ggf. vorhandenen Rahmenelementen (6) verbinden oder die Durchsichtbereiche (2; 102; 202) miteinander verbinden,
wobei die Ohrauflagestützen (8; 108; 208) und die ggf. vorhandenen Rahmenelemente (6) sowie die Verbindungsbereiche (16; 216) zumindest abschnittsweise flexibel biegsam sind und
wobei die Ohrauflagestützen (8; 108; 208) aus einem entspannten Zustand der Brille heraus unter quasi-elastischer Deformation der Brille einschließlich wenigstens eines der Verbindungsbereiche (16; 216) voneinander abspreizbar sind, um sie in eine normale Gebrauchsposition (8c) am Kopf des Brillenträgers zu bringen, **dadurch gekennzeichnet,**
**dass** zumindest die Durchsichtbereiche (2; 102; 202) aus einem elastomeren optischen Polyurethan-Kunststoff hergestellt sind, so dass sie flexibel biegsam sind.

2. Brille nach Anspruch 1, **dadurch gekennzeichnet, dass** auch die Ohrauflagestützen (8; 108; 208), die ggf. vorhandenen Rahmenelemente (6) sowie die Verbindungsbereiche jeweils aus Polyurethan (PU) hergestellt sind, so dass sie flexibel biegsam sind.

3. Brille nach Anspruch 1 oder Anspruch 2, **dadurch gekennzeichnet, dass** der wenigstens eine Verbindungsbereich (16; 216) eine geringere Biegesteifigkeit aufweist als die Ohrauflagestützen (8; 208) und die Durchsichtbereiche (2; 202) bzw. die ggf. vorhandenen Rahmenelemente.

4. Brille nach einem der vorhergehenden Ansprüche, **dadurch gekennzeichnet, dass** der wenigstens eine Verbindungsbereich einen Materialschwächungsabschnitt, insbesondere eine Nut oder eine Ausnehmung aufweist.

5. Brille nach einem der vorhergehenden Ansprüche, **dadurch gekennzeichnet, dass** der wenigstens eine Verbindungsbereich (16; 216) aus einem anderen Material gebildet ist als die Ohrauflagestützen (8; 208) und die Durchsichtbereiche (2; 202) bzw. die ggf. vorhandenen Rahmenelemente.

6. Brille nach einem der vorhergehenden Ansprüche, **dadurch gekennzeichnet, dass** der wenigstens eine Verbindungsbereich (16; 216) aus einem gummielastischen Material gebildet ist.

7. Brille nach einem der vorhergehenden Ansprüche, **dadurch gekennzeichnet, dass** der wenigstens eine Verbindungsbereich (16; 216) aus Gummi und die Ohrauflagestützen (8; 208) und die Durchsichtbereiche (2; 202) bzw. die ggf. vorhandenen Rahmenelemente aus einem thermoplastischen Elastomer gebildet sind.

8. Brille nach einem der vorhergehenden Ansprüche, **dadurch gekennzeichnet, dass** der wenigstens eine Verbindungsbereich (16; 216) eine Shore-A-Härte von ca. 75 bis ca. 85, vorzugsweise von ca. 80 aufweist und die Ohrauflagestützen (8; 208) und die Durchsichtbereiche (2; 202) bzw. die ggf. vorhandenen Rahmenelemente eine Shore-D-Härte von ca. 50 bis ca. 60, vorzugsweise von ca. 55 aufweisen.

9. Brille nach einem der vorhergehenden Ansprüche, **dadurch gekennzeichnet, dass** die Durchsichtbereiche (2) für das linke Auge und für das rechte Auge Teil eines einstückigen Sichtfensters sind.

10. Brille nach einem der vorhergehenden Ansprüche, **dadurch gekennzeichnet, dass** im normalen Gebrauchszustand der Brille zueinander weisende innere Längsseiten (22) der Ohrauflagestützen (8) eine konkave Querschnittsform aufweisen.

11. Brille nach einem der vorhergehenden Ansprüche, **dadurch gekennzeichnet, dass** jede Ohrauflagestütze (8) über einen Verbindungsbereich (16) mit dem zugeordneten Durchsichtbereich (2) bzw. dem ggf. vorhandenen Rahmenelement verbunden ist und dass im normalen Gebrauchszustand der Brille zueinander weisende innere Seiten (24) der Verbindungselemente (16) eine konkave Querschnittsform aufweisen.

12. Brille nach einem der vorhergehenden Ansprüche, **dadurch gekennzeichnet, dass** die Außenkonturen der Ohrauflagestützen (8; 108; 208), der Durchsichtbereiche (2; 102; 202), der Verbindungsbereiche (16; 216) und der ggf. vorhandenen Rahmenelemente im Wesentlichen stetig ineinander übergehen.

13. Brille nach einem der vorhergehenden Ansprüche, **dadurch gekennzeichnet, dass** die Durchsichtbereiche (2; 102; 202) bzw. die ggf. vorhandenen Rahmenelemente von einer Ohrauflagestütze (8; 108; 208) zur anderen Ohrauflagestütze (8; 108; 208) entlang eines Bogens verlaufen.

14. Brille nach einem der vorhergehenden Ansprüche, **dadurch gekennzeichnet, dass** sie im normalen Gebrauchszustand am Kopf des Brillenträgers im Wesentlichen die Gesamtform eines Dreiviertelkreisrings aufweist.

15. Brille nach einem der vorhergehenden Ansprüche, **dadurch gekennzeichnet, dass** die Durchsichtbereiche (2; 102), ggf. vorhandene Rahmenelemente, die Ohrauflagestützen (8; 108) und die Verbindungsbereiche (16) einstückig zusammenhängen, so dass sie einen in sich biegsamen, unzerbrechlichen Brillenkörper bilden.

16. Brille nach einem der vorhergehenden Ansprüche, **dadurch gekennzeichnet, dass** sie zumindest teilweise, vorzugsweise insgesamt aus einem Polymer-Werkstoff mit entsprechend optischen Eigenschaften, insbesondere aus einem Polyurethan-Kunststoff oder/und Silikonkautschuk oder/und Polyamid-Kunststoff gebildet ist.

17. Brille nach einem der vorhergehenden Ansprüche, **dadurch gekennzeichnet, dass** sie in einem Zwei- oder Mehrkomponenten-Spritzgussverfahren oder -Gießverfahren hergestellt worden ist.

18. Brille nach einem der vorhergehenden Ansprüche, **dadurch gekennzeichnet, dass** sie als Sonnenbrille ausgebildet ist und dass die Durchsichtbereiche (2; 102; 202) für ultraviolette Strahlung im Wesentlichen undurchlässig sind.

19. Brille nach einem der vorhergehenden Ansprüche, **dadurch gekennzeichnet, dass** die Ohrauflagestützen (108) Hinterohr-Halteabschnitte (110) umfassen, welche zum Zwecke der Justierung des Passsitzes der Brille am Kopf des jeweiligen Brillenträgers verstellbar sind.

20. Brille nach Anspruch 19, **dadurch gekennzeichnet, dass** die Hinterohr-Halteabschnitte (110) an den Ohrauflagestützen (108) relativ dazu verschiebbar angeordnet sind.

21. Brille nach Anspruch 20, **dadurch gekennzeichnet, dass** die Hinterohr-Halteabschnitte (110) jeweils eine von einer jeweiligen Ohrauflagestütze durchsetzte Öse (112) haben.

22. Brille nach Anspruch 20, **dadurch gekennzeichnet, dass** die Hinterohr-Halteabschnitte (110) teleskopisch einschiebbare und ausziehbare Verlängerungsabschnitte der Ohrauflagestützen (108) sind.

23. Brille nach Anspruch 19, **dadurch gekennzeichnet, dass** die Hinterohr-Halteabschnitte (110) integrale, gummielastisch biegsame Bestandteile der Ohrauflagestützen (108) sind und von wenigstens einem biegsamen Metallstützdraht (114) durchsetzt sind.

## Claims

1. Spectacles comprising transparent regions (2; 102; 202) for the left eye and for the right eye of a spectacles wearer, comprising two elongate arms (8; 108; 208) for supporting the spectacles on the ears of the spectacles wearer, if appropriate comprising frame elements (6) which define or interconnect the transparent regions (2; 102; 202), and comprising connecting regions (16; 216) which connect the arms (8; 108; 208) to the transparent regions (2; 102; 202) and to the frame elements (6), if present, or interconnect the transparent regions (2; 102; 202),
the arms (8; 108; 208) and the frame elements (6), if present, and the connecting regions (16; 216) being bendable at least in portions and
the arms (8; 108; 208) being able to open out from an unstressed state of the spectacles under quasi-resilient deformation of the spectacles, including at least one of the connecting regions (16; 216), in order to bring said arms into a normal position of use (8c) on the head of the spectacles wearer,
**characterised in that**
at least the transparent regions (2; 102; 202) are produced from an optical elastomer polyurethane (PU) plastics material so as to be bendable.

2. Spectacles according to claim 1, **characterised in that** the arms (8; 108; 208), the frame elements (6), if present, and the connecting regions are each produced from polyurethane so as to be bendable.

3. Spectacles according to either claim 1 or claim 2, **characterised in that** the at least one connecting region (16; 216) has a lower bending resistance than the arms (8; 208) and the transparent regions (2; 202) and the frame elements, if present.

4. Spectacles according to any one of the preceding claims, **characterised in that** the at least one connecting region has a point of material weakness, in particular a groove or a recess.

5. Spectacles according to any one of the preceding claims, **characterised in that** the at least one connecting region (16; 216) is formed from a different material to that of the arms (8; 208) and the transparent regions (2; 202) and the frame elements, if present.

6. Spectacles according to any one of the preceding claims, **characterised in that** the at least one connecting region (16; 216) is formed from a rubber resilient material.

7. Spectacles according to any one of the preceding claims, **characterised in that** the at least one connecting region (16; 216) is formed from rubber, and **in that** the arms (8; 208) and the transparent regions (2; 202) and the frame elements, if present, are formed from a thermoplastic elastomer.

8. Spectacles according to any one of the preceding claims, **characterised in that** the at least one connecting region (16; 216) has a Shore A hardness of approximately 75 to approximately 85, preferably of approximately 80, and the arms (8; 208) and the transparent regions (2; 202) and the frame elements, if present, have a Shore D hardness of approximately 50 to approximately 60, preferably of approximately 55.

9. Spectacles according to any one of the preceding claims, **characterised in that** the transparent regions (2) for the left eye and for the right eye are part of a lens formed in one piece.

10. Spectacles according to any one of the preceding claims, **characterised in that** in normal use of the spectacles, the inner longitudinal sides (22) of the arms (8) facing towards each other have a concave cross-section.

11. Spectacles according to any one of the preceding claims, **characterised in that** each arm (8) is connected to the associated transparent region (2) and frame element, if present, by a connecting region (16), and **in that** in normal use of the spectacles, the inner sides (24) of the connecting elements (16) facing towards each other have a concave cross-section.

12. Spectacles according to any one of the preceding claims, **characterised in that** the external outlines of the arms (8; 108; 208), of the transparent regions (2; 102; 202), of the connecting regions (16; 216) and of the frame elements, if present, merge into each other substantially continuously.

13. Spectacles according to any one of the preceding claims, **characterised in that** the transparent regions (2; 102; 202) and the frame elements, if present, extend from one arm (8; 108; 208) to the other arm (8; 108; 208) along a curve.

14. Spectacles according to any one of the preceding claims, **characterised in that**, in normal use on the head of the spectacles wearer, said spectacles are overall substantially three-quarter-circle-shaped.

15. Spectacles according to any one of the preceding claims, **characterised in that** the transparent regions (2; 102), the frame elements, if present, the arms (8; 108) and the connecting regions (16) are integrally connected so as to form an inherently bendable and unbreakable body of the spectacles.

16. Spectacles according to any one of the preceding claims, **characterised in that** said spectacles are formed at least in part, preferably completely, from a polymer material having appropriate optical properties, in particular from a polyurethane plastics material or/and silicon rubber or/and polyamide plastics material.

17. Spectacles according to any one of the preceding claims, **characterised in that** said spectacles have been produced using a two-component or multi-component injection moulding method or casting method.

18. Spectacles according to any one of the preceding claims, **characterised in that** said spectacles are configured as sunglasses, and **in that** the transparent regions (2; 102; 202) are substantially impenetrable to ultraviolet radiation.

19. Spectacles according to any one of the preceding claims, **characterised in that** the arms (108) comprise earpiece portions (110) which are adjustable for the purpose of adjusting the fit of the spectacles to the head of each spectacles wearer.

20. Spectacles according to claim 19, **characterised in that** the earpiece portions (110) on the arms (108) are arranged so as to be displaceable relative to said arms.

21. Spectacles according to claim 20, **characterised in that** the earpiece portions (110) each have a loop (112) which is penetrated by a respective arm.

22. Spectacles according to claim 20, **characterised in that** the earpiece portions (110) are telescopically retractable and extendable lengthening portions of the arms (108).

23. Spectacles according to claim 19, **characterised in that** the earpiece portions (110) are integral, rubber-resiliently bendable components of the arms (108) and are penetrated by at least one bendable metal supporting wire (114).

## Revendications

1. Lunettes avec des zones transparentes (2 ; 102 ; 202) pour l'oeil gauche et pour l'oeil droit d'un porteur de lunettes, avec deux branches (8 ; 108 ; 208) oblongues pour l'appui des lunettes contre les oreilles du porteur de lunettes, éventuellement avec des éléments de cadre (6) délimitant ou reliant les zones transparentes (2 ; 102 ; 202) entre elles, ainsi qu'avec des zones de liaison (16 ; 216) qui relient les branches (8 ; 108 ; 208) aux zones transparentes (2 ; 102 ; 202) ou aux éléments de cadre (6) éventuellement présents ou relient les zones transparentes (2 ; 102 ; 202) entre elles,
sachant que les branches (8 ; 108 ; 208) et les éléments de cadre (6) éventuellement présents ainsi que les zones de liaison (16 ; 216) sont souples et flexibles au moins par section et
sachant que les branches (8 ; 108 ; 208) peuvent être écartées l'une de l'autre depuis un état détendu des lunettes sous déformation quasi-élastique des lunettes, y compris d'au moins l'une des zones de liaison (16 ; 216) afin de les amener dans une position d'utilisation normale (8c) sur la tête du porteur de lunettes,
**caractérisées en ce**
**qu'**au moins les zones transparentes (2 ; 102 ; 202) sont fabriquées en un plastique polyuréthanique optique élastomère de sorte qu'elles soient souples et flexibles.

2. Lunettes selon la revendication 1, **caractérisées en ce que** les branches (8 ; 108 ; 208), les éléments de cadre (6) éventuellement présents ainsi que les zones de liaison sont aussi fabriqués respectivement en polyuréthane (PU) de sorte qu'ils soient souples et flexibles.

3. Lunettes selon la revendication 1 ou 2, **caractérisées en ce qu'**au moins une zone de liaison (16 ; 216) présente une rigidité à la flexion moindre que les branches (8 ; 208) et les zones transparentes (2 ; 202) ou les éléments de cadre éventuellement présents.

4. Lunettes selon l'une quelconque des revendications précédentes, **caractérisées en ce qu'**au moins une zone de liaison présente une section d'affaiblissement de matériau, en particulier une rainure ou un évidement.

5. Lunettes selon l'une quelconque des revendications précédentes, **caractérisées en ce qu'**au moins une zone de liaison (16 ; 216) est constituée d'un autre matériau que les branches (8 ; 208) et les zones transparentes (2 ; 202) ou les éléments de cadre éventuellement présents.

6. Lunettes selon l'une quelconque des revendications précédentes, **caractérisées en ce qu'**au moins une zone de liaison (16 ; 216) est constituée de matériau de gomme élastique.

7. Lunettes selon l'une quelconque des revendications précédentes, **caractérisées en ce qu'**au moins une zone de liaison (16 ; 216) est constituée de caoutchouc et les branches (8 ; 208) et les zones transparentes (2 ; 202) ou les éléments de cadre éventuellement présents sont constitués d'un élastomère thermoplastique.

8. Lunettes selon l'une quelconque des revendications précédentes, **caractérisées en ce qu'**au moins une zone de liaison (16 ; 216) présente une dureté shore A d'environ 75 à environ 85, de préférence d'environ 80, et les branches (8 ; 208) et les zones de liaison (2 ; 202) ou les éléments de cadre éventuellement présents présentent une durée shore D d'environ 50 à environ 60, de préférence d'environ 55.

9. Lunettes selon l'une quelconque des revendications précédentes, **caractérisées en ce que** les zones transparentes (2) pour l'oeil gauche et pour l'oeil droit font partie d'une fenêtre de vue en une partie.

10. Lunettes selon l'une quelconque des revendications précédentes, **caractérisées en ce que** des côtés longitudinaux (22) intérieurs, tournés l'un vers l'autre à l'état d'utilisation normal des lunettes, des branches (8) présentent une forme de section transversale concave.

11. Lunettes selon l'une quelconque des revendications précédentes, **caractérisées en ce que** chaque branche (8) est reliée par une zone de liaison (16) à la zone transparente (2) associée ou l'élément de cadre éventuellement présent et **en ce que** des côtés intérieurs (24), tournés l'un vers l'autre à l'état d'utilisation normal des lunettes, des éléments de liaison (16) présentent une forme de section transversale concave.

12. Lunettes selon l'une quelconque des revendications précédentes, **caractérisées en ce que** les contours extérieurs des branches (8 ; 108 ; 208) des zones transparentes (2 ; 102 ; 202), des zones de liaison (16 ; 216) et des éléments de cadre éventuellement présents passent sensiblement en permanence les uns dans les autres.

13. Lunettes selon l'une quelconque des revendications précédentes, **caractérisées en ce que** les zones transparentes (2 ; 102 ; 202) ou les éléments de cadre éventuellement présents s'étendent d'une branche (8 ; 108 ; 208) à l'autre branche (8 ; 108 ; 208) le long d'un arc.

14. Lunettes selon l'une quelconque des revendications précédentes, **caractérisées en ce qu'**elles présentent à l'état d'utilisation normal sur la tête du porteur de lunettes sensiblement la forme globale d'un trois quarts d'anneau de cercle.

15. Lunettes selon l'une quelconque des revendications précédentes, **caractérisées en ce que** les zones transparentes (2 ; 102), les éléments de cadre éventuellement présents, les branches (8 ; 108) et les zones de liaison (16) sont d'un seul tenant de sorte à former un corps de lunettes incassable, souple en soi.

16. Lunettes selon l'une quelconque des revendications précédentes, **caractérisées en ce qu'**elles sont constituées au moins en partie, de préférence dans l'ensemble d'un matériau de polymère aux propriétés optiques correspondantes, en particulier de plastique polyuréthanique et/ou de caoutchouc de silicone et/ou de plastique de polyamide.

17. Lunettes selon l'une quelconque des revendications précédentes, **caractérisées en ce qu'**elles ont été fabriquées dans un procédé de moulage par injection ou procédé de coulée à deux ou plusieurs composants.

18. Lunettes selon l'une quelconque des revendications précédentes, **caractérisées en ce qu'**elles sont réalisées comme des lunettes de soleil et **en ce que** les zones transparentes (2 ; 102 ; 202) sont sensiblement imperméables au rayonnement ultraviolet.

19. Lunettes selon l'une quelconque des revendications précédentes, **caractérisées en ce que** les branches (108) comportent des sections de retenue se plaçant derrière l'oreille (110) qui sont réglables à des fins d'ajustement de précision des lunettes sur la tête du porteur de lunettes respectif.

20. Lunettes selon la revendication 19, **caractérisées en ce que** les sections de retenue se plaçant derrière l'oreille (110) sont disposées sur les branches (108) de manière mobile par rapport à celles-ci.

21. Lunettes selon la revendication 20, **caractérisées en ce que** les sections de retenue se plaçant derrière l'oreille (110) présentent chacune un oeillet (112) traversé par une branche respective.

22. Lunettes selon la revendication 20, **caractérisées en ce que** les sections de retenue se plaçant derrière l'oreille (110) sont des sections de prolongement rétractables et étirables de manière télescopique des branches (108).

23. Lunettes selon la revendication 19, **caractérisées en ce que** les sections de retenue se plaçant derrière l'oreille (110) sont des constituants intégraux, souples en gomme élastique des branches (108) et sont traversées par au moins un fil métallique porteur (114) souple.
